# EUROPÄISCHE PATENTANMELDUNG

(11) **EP 1 928 066 A2**
(43) Veröffentlichungstag der Anmeldung: **04.06.2008**
(21) Anmeldenummer: 07117306.6
(22) Anmeldetag: 26.09.2007
(51) Int. Cl.: H02G 5/00

(54) **Verfahren und Vorrichtung zur Verbindung von Stromschienen**

(30) Priorität: 29.11.2006 CH 19362006
(71) Anmelder: Zurecon AG, 8003 Zürich (CH)
(72) Erfinder: Pfluger, Gerd, CH-4625, Oberbuchsiten (CH)
(74) Vertreter: Rutz & Partner

(57) **Zusammenfassung**

Das Verfahren und die Vorrichtung dienen der Verbindung von Stromschienen bzw. Stromschienenelementen (1A, 1B), die je wenigstens einen in einem Isolationskörper (12A, 12B) eingeschlossenen elektrischen Leiter (11A, 11B) aufweisen. Dazu ist eine Kupplungsgarnitur (2) vorgesehen, die mechanische Montagemittel, wie Schrauben (21), Isolationsplatten, Kontaktplatten (22) und Schraubenmuttern (23), sowie ein vorzugsweise abschliessbares ein- oder mehrteiliges Kupplungsgehäuse (61, 62) umfasst. Gemäss dem Verfahren werden in einem ersten Schritt die Enden der elektrischen Leiter (11A, 11B) beider Stromschienenelemente (1A, 1B) anhand der mechanischen Montagemittel (21, 22, 23) fest miteinander verbunden. In einem zweiten Schritt wird das Kupplungsgehäuse (61, 62) derart montiert, dass es die miteinander verbunden Enden der elektrischen Leiter (11A, 11B) beider Stromschienenelemente (1A, 1B) oder die miteinander verbunden Enden der elektrischen Leiter (11A, 11B) beider Stromschienenelemente (1A, 1B) sowie die Enden der Isolationskörper (12A, 12B) umfasst. In einem anschliessenden dritten Schritt wird das Kupplungsgehäuse (61, 62) mit Füllmaterial (5) gefüllt. Erfindungsgemäss werden die miteinander verbundenen Enden der elektrischen Leiter (11A, 11B) beider Stromschienenelemente (1A, 1B) nach der Durchführung des ersten Schritts und noch vor der Durchführung des zweiten Schritts mit einem Isolationselement (3; 30; 300) umschlossen, welches die Enden der elektrischen Leiter (11A, 11B), gegen das Füllmaterial (5) weitgehend abdichtet, das nach der Montage des Kupplungsgehäuses (61, 62) in dieses eingefüllt wird.

## Beschreibung

Die Erfindung betrifft ein Verfahren und eine Vorrichtung zur Verbindung von Stromschienen bzw. Stromschienenelementen nach dem Oberbegriff des Patentanspruchs 1 bzw. 5.

Stromschienen und deren Verwendung sowie dafür vorgesehene Befestigungsvorrichtungen sind beispielsweise in [1] und [2], Produktkataloge "Niederspannungs-Schienenverteiler LANZ HE 2.5.2" der LANZ OENSINGEN AG vom März 2002 und Februar 2006 beschrieben.

Stromschienen bzw. Stromschienenverteiler werden als Übertragungsleitungen zwischen Transformator, Haupt- und Unterverteiler in Gebäuden oder Anlagen eingesetzt. Typischerweise werden Stromschienen in Fabrikhallen, Gewerbe- und Verwaltungsgebäuden oder auch als Steigleitungen in Hochbauten eingesetzt.

Zur Minimierung von durch den Skineffekt verursachten Verlusten werden normalerweise Stromschienen mit mehreren, allgemein n mal m Kupfer- oder Aluminium-Leitern verwendet. Einzelne Stromschienenbauteile, die beispielsweise in Giessharz oder Polymerbeton vergossen und in Blech gekapselt sind, können dabei ein Gewicht von bis zu 400 kg und mehr aufweisen.

Zur Verbindung der einzelnen Stromschienenbauteile sind Kupplungen verwendbar, wie sie in [1], Seiten 2 und 9 beschrieben sind. Durch diese Kupplungen erfolgt eine zuverlässige elektrische und mechanische Verbindung der elektrischen Leiter. In [1] beschriebene Kupplungsgarnituren umfassen massive Pressplatten aus verzinktem Stahl, verzinkte Spannschrauben mit Arretierscheiben, Schraubenmuttern, und Kontaktlaschen aus Kupfer oder Aluminium zur grossflächigen Überdeckung der Leiterenden. Ferner sind mit Dichtungen versehene Halbschalen z.B. aus Duroplast oder Stahlblech vorgesehen, die zu einem Kupplungsgehäuse zusammengefügt und mit einem Gehäuseverschluss abgeschlossen werden können.

Eine anhand einer solchen Garnitur realisierte Kupplung weist den Schutzgrad IP68 auf, wenn sie zusätzlich mit einem Füllmaterial wie Giessharz oder Polymerbeton vergossen wird, welches die Enden der Stromschienen und sämtliche Kupplungsteile vollständig umschliesst und nach aussen abdichtet.

Ein mit vergossenen Kupplungen versehenes Schienensystem ist daher auch für den Einsatz im Freien oder für die Verlegung im Erdreich geeignet.

Diese äusserst stabilen und robusten mit Füllmaterial vergossenen Kupplungen weisen jedoch den Nachteil auf, dass sie ohne Zerstörung der Stromschienen nicht oder nur mit sehr grossem Aufwand wieder lösbar sind. Sofern bei baulichen Änderungen die elektrischen Installationen angepasst werden müssen, ist dies daher nur mit grossem Aufwand möglich. Derart vergossene Stromschienen, die nicht mehr dem aktuellen Installationsplan entsprechen, müssen daher entfernt und durch neue Einheiten ersetzt werden.

Aus den genannten Gründen ist auch eine Kontrolle und Wartung der Kupplungen nicht möglich.

Weitere Nachteile sind der hohe Verbrauch von Füllmaterial, beispielsweise Giessharz oder Polymerbeton, sowie die lange Dauer des Vergussprozesses, denn das zähflüssige Füllmaterial muss in alle Hohlräume eindringen und gegebenenfalls ein oder mehrmals nachgefüllt werden.

Der vorliegenden Erfindung liegt daher die Aufgabe zugrunde, eine verbessertes Verfahren und eine verbesserte Vorrichtung zur Verbindung von Stromschienen zu schaffen.

Diese Aufgabe wird mit einem Verfahren und einer Vorrichtung gelöst, welche die in Anspruch 1 bzw. 4 angegebenen Merkmale aufweisen. Vorteilhafte Ausgestaltungen der Erfindung sind in weiteren Ansprüchen angegeben.

Das Verfahren dient der Verbindung von Stromschienen, die je wenigstens einen in einem Isolationskörper eingeschlossenen elektrischen Leiter aufweisen.

Die Verbindung der Stromschienen erfolgt anhand einer Kupplungsgarnitur,
a) mittels mechanischen Montagemitteln, wie Schrauben, Pressplatten, Kontaktplatten und Schraubenmuttern, mittels derer die Enden der elektrischen Leiter beider Stromschienen in einem ersten Schritt fest miteinander verbunden werden; und
b) mittels eines abschliessbaren ein- oder mehrteiligen Kupplungsgehäuses, welches mit den Enden der Isolationskörper in einem zweiten Schritt verbunden und
c) in einem anschliessenden dritten Schritt mit einem Füllmaterial, beispielsweise einem pastösen Füllmaterial, wie Giessharz oder Polymerbeton gefüllt wird.

Erfindungsgemäss werden die miteinander verbundenen Enden der elektrischen Leiter beider Stromschienen nach Durchführung des ersten Schritts und noch vor Durchführung des zweiten Schritts mit einem Isolationselement umschlossen, welches die Enden der elektrischen Leiter gegen das Füllmaterial, das nach der Montage des Kupplungsgehäuses in dieses eingefüllt wird, weitgehend abdichtet.

Die erfindungsgemässe Lösung weist zahlreiche Vorteile auf. Einerseits resultiert beim Verbinden der Stromschienen wie auch bei den konventionellen Verfahren eine qualitative hochwertige mechanische und elektrische Verbindung der Enden der elektrischen Leiter beider Stromschienen, die aufgrund des in das Kupplungsgehäuse eingefüllten Füllmaterials zudem wasserdicht eingeschlossen sind.

Aufgrund des verwendeten Isolationselements und gegebenenfalls eines davon umschlossenen, ergänzenden Zusatzstoffs resultiert ein reduzierter Bedarf an Füllmaterial, welches sich beispielsweise durch entsprechende Dimensionierung des Isolationselements und/oder des Zusatzstoffs genau dosieren lässt.

Aufgrund der reduzierten Menge an Füllmaterial resultiert zudem eine entsprechende Beschleunigung des Vergiessvorgangs. Die Stromschienen können deutlich schneller verlegt werden.

Sofern ein Defekt aufgetreten oder eine Änderung der Infrastruktur zu vollziehen ist, können erfindungsgemäss verbundene Stromschienen problemlos wieder voneinander getrennt werden. Das Füllmaterial kann aufgetrennt und leicht vom Isolationselement gelöst werden, welches seinerseits, zusammen mit dem gegebenenfalls vorgesehenen Zusatzstoff, rasch entfernt werden kann. Die freigelegte mechanische Verbindung kann nun geprüft und/oder gelöst werden, um ein neues Stromschienenteil zu montieren. Die gelösten Stromschienenteile bleiben unbeschädigt und können in der betreffenden Anlage oder anderweitig wieder verwendet werden.

Das Isolationselement besteht aus einem elektrisch isolierenden Material, welches vorzugsweise innerhalb eines Temperaturbereichs von -40°C bis zu 150°C temperaturbeständig ist.

Das Isolationselement ist beispielsweise
a) ein vorzugsweise elastisches Isolationsband, mittels dessen die gekoppelten Enden der elektrischen Leiter umwickelt werden; oder
b) ein zumindest teilweise elastisches Rohr oder ein Balg, der über die Enden der elektrischen Leiter gestülpt und gegebenenfalls thermisch geschrumpft wird; oder
c) eine ein- oder mehrteilige feste oder elastische Innenverschalung, mittels der die Enden der elektrischen Leiter gegen das Eindringen von Füllmaterial abgedeckt werden.

Das Isolationselement wird vorzugsweise derart gewählt, dass es einen wesentlichen Teil, beispielsweise bis zu 70%, des Volumens füllt, das als Differenz zwischen dem Volumen des Kupplungsgehäuses und dem Volumen der miteinander gekoppelten Enden der elektrischen Leiter resultiert und das früher vollständig mit pastösem Füllmaterial gefüllt wurde. Dieses Volumen muss daher nicht mehr vollständig, sondern nur noch zu einem geringen Teil mit Füllmaterial gefüllt werden, wodurch die oben bezeichneten Vorteile resultieren.

Nachfolgend wird die Erfindung, einschliesslich weiterer vorzugsweiser Ausgestaltungen anhand von Zeichnungen näher erläutert. Dabei zeigt:
- Figur 1: ein Endstück einer Stromschiene 1 mit vier in einem Isolationskörper 12 eingebetteten elektrischen Leitern 11, deren Enden freiliegend sind;
- Figur 2: die Verbindung der Enden von zwei Stromschienen 1A, 1B gemäss Figur 1 mittels Montagemitteln 21, 22, 23;
- Figur 3: die miteinander verbundenen Enden der zwei Stromschienen 1A, 1B von Figur 2 mit der anhand der Leiterenden 11A, 11B und der Montagemittel 21, 22, 23 realisierten mechanischen Kupplung, welche mittels eines aus zwei Teilen bestehenden Kupplungsgehäuses 61, 62 umschlossen wird, das anschliessend mit Füllmaterial 5, wie Giessharz oder Polymerbeton, gefüllt wird;
- Figur 4: die miteinander verbundenen Enden der zwei Stromschienen 1A, 1B von Figur 3 mit der nach einem bekannten Verfahren fertig gestellten Kupplung 2;
- Figur 5: die mittels der Montagemittel 21, 22, 23 miteinander verbundenen Enden der zwei Stromschienen 1A, 1B von Figur 2, welche erfindungsgemäss von dem bandförmigen Isolationselement 3 umschlossen sind, welches transparent dargestellt ist;
- Figur 6: die miteinander verbundenen und vom Isolationselement 3 umschlossenen Enden der zwei Stromschienen 1A, 1B von Figur 5, während der Montage des Kupplungsgehäuses 61, 62;
- Figur 7: die miteinander verbundenen und mit dem Kupplungsgehäuse 61, 62 versehenen Stromschienen 1A, 1B von Figur 6, während des Einfüllen des Füllmaterials 5;
- Figur 8: ein balgförmiges Isolationselement 30;
- Figur 9: eine als Isolationselement 300 dienende zweiteilige Innenverschalung;
- Figur 10: eine aus [2], Seite 9 bekannte Kupplungsvorrichtung mit zwei Stromschienenelementen 1A, 1B; und
- Figur 11: die zwei Stromschienenelemente 1A, 1B von Figur 10, die in seitliche Öffnungen 60A bzw. 60B eines schachtel- oder quaderförmig ausgestalteten Kupplungsgehäuses 2 eingeführt und innerhalb des Kupplungsgehäuses 2 mittels der in Figur 10 gezeigten Kopplungsvorrichtung miteinander verbunden sind.

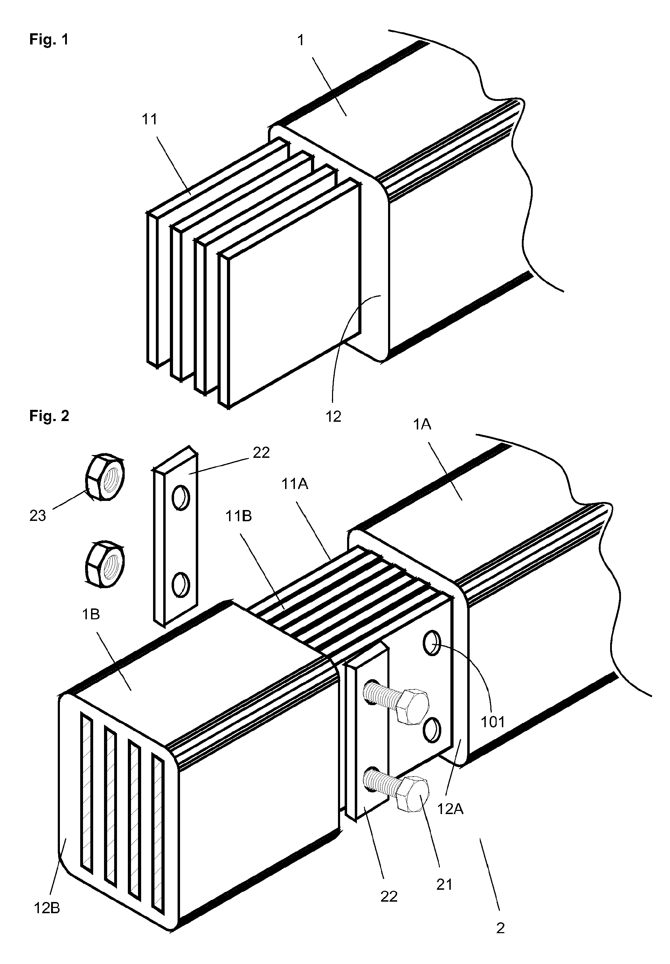

Figur 1 zeigt ein Endstück einer z.B. aus [1] bekannten Stromschiene 1 mit vier in einem Isolationskörper 12 eingebetteten elektrischen Leitern 11, deren Enden frei liegen.

Figur 2 zeigt die Verbindung der Enden von zwei Stromschienen 1A, 1B mittels Montagemitteln 21, 22, 23, welche Schrauben 21, Schraubenmuttern 23 und weitere Hilfselemente, wie eine Kontaktplatte 22 umfassen. Möglich ist die zusätzliche Verwendung beispielsweise von Pressplatten, Kontaktlaschen und Spannscheiben. In Figur 2 ist gezeigt, dass die Schrauben 21, welche paarweise eine Kontaktplatte 22 halten, durch Bohrungen 101 in den Leiterenden 11A, 11B geführt und mit Schraubenmuttern 23 verbunden sind.

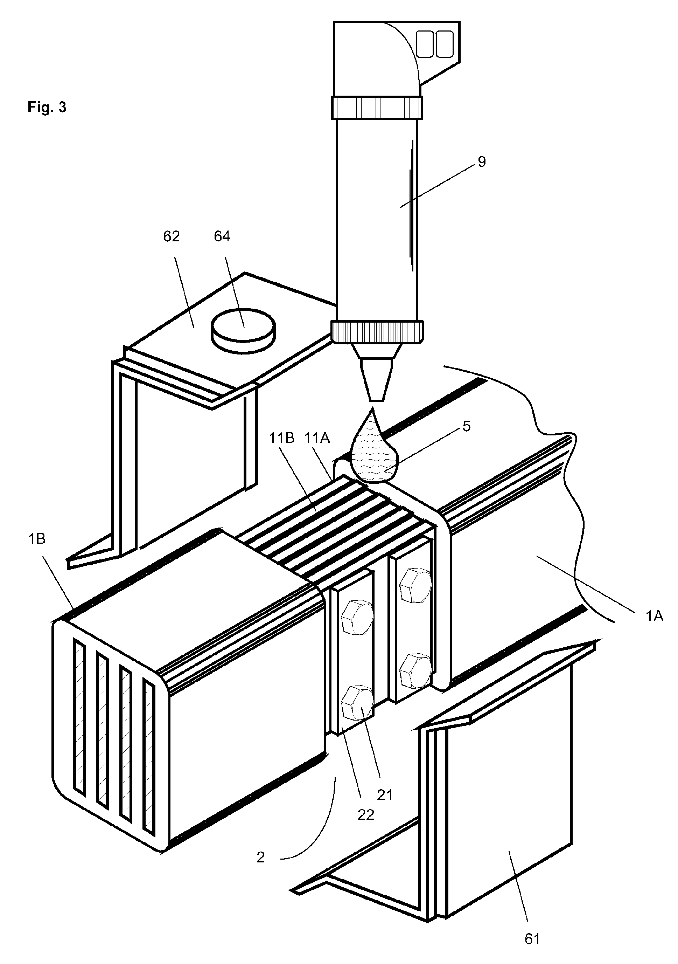

Figur 3 zeigt die miteinander verbundenen Enden der zwei Stromschienen 1A, 1B von Figur 2 mit der anhand der Leiterenden 11A, 11B und der Montagemittel 21, 22, 23 realisierten mechanischen Kupplung, welche mittels eines aus zwei Teilen bestehenden Kupplungsgehäuses 61, 62 umschlossen wird. Das Kupplungsgehäuse 61, 62 erlaubt die Aufnahme von Füllmaterial 5 und ist dazu entsprechend dicht abschliessbar. Für das Einfüllen des Füllmaterials 5 in das montierte Kupplungsgehäuse 61, 62 weist dieses vorzugsweise eine beispielsweise mittels eines Deckels 24 abschliessbare Öffnung auf. In Figur 3 ist eine Pistole 9 gezeigt, anhand der das Füllmaterial 5 unter Druck in das Kupplungsgehäuse 61, 62 einfüllbar ist. Pistolen 9 dieser Art werden beispielsweise mit Kartuschen bestückt, in denen das Füllmaterial 5 gelagert ist.

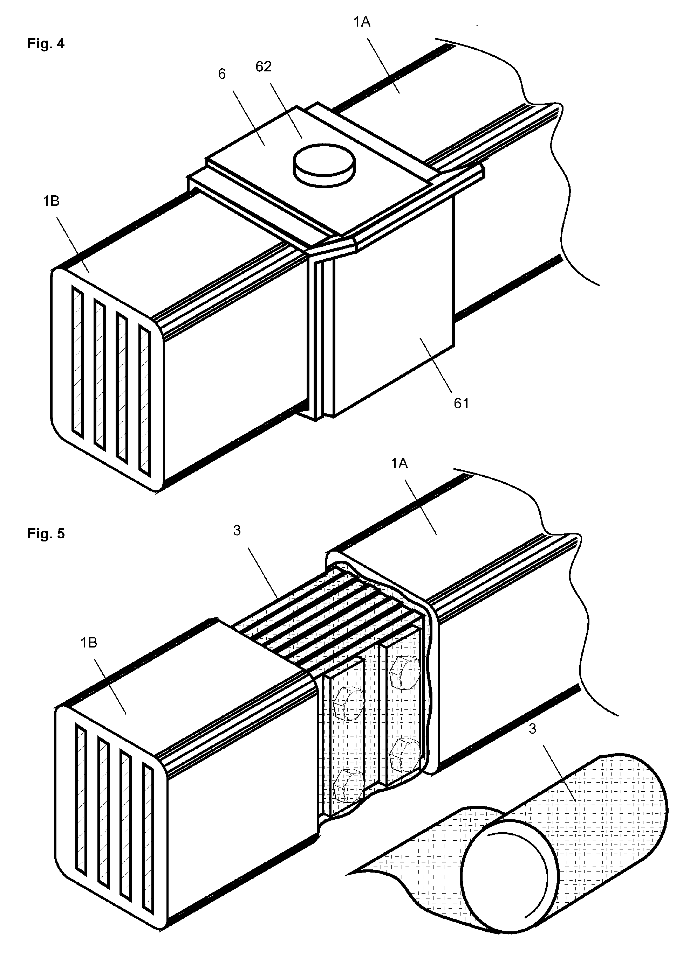

Figur 4 zeigt die miteinander verbundenen Enden der zwei Stromschienen 1A, 1B von Figur 3 mit der nach dem beispielsweise aus [1] bekannten Verfahren fertig gestellten Kupplung 2.

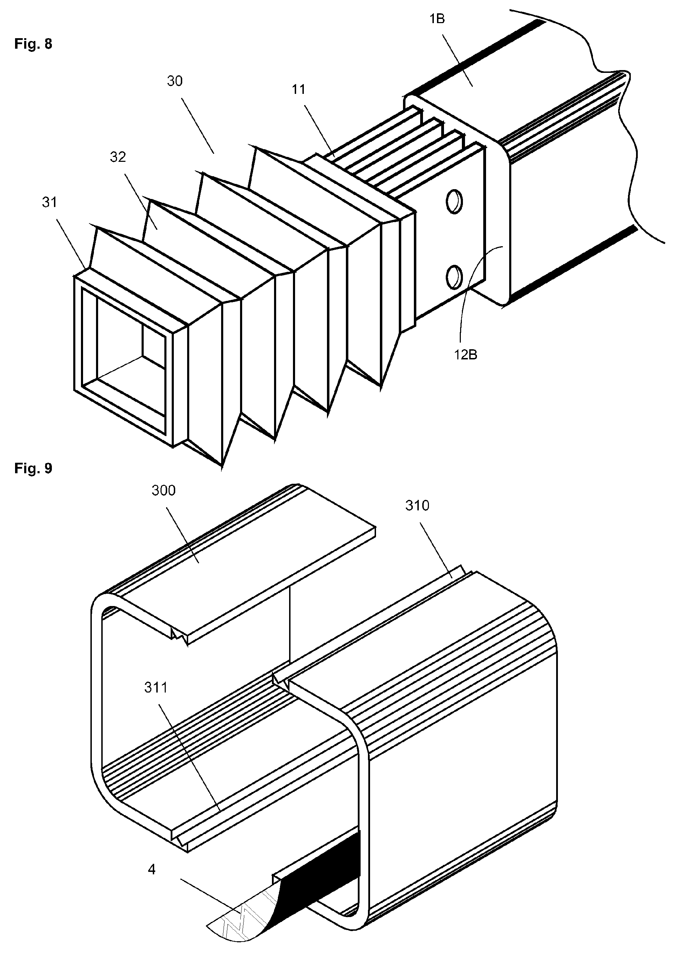

Figur 5 zeigt die mittels der Montagemittel 21, 22, 23 miteinander verbundenen Stromschienenden 1A, 1B von Figur 2, welche erfindungsgemäss von einem bandförmigen Isolationselement 3 umschlossen sind, welches transparent dargestellt ist. Nach dem mechanischen Verbinden der Stromschienenden 1A, 1B wird die resultierende mechanische Kupplung mit dem vorzugsweise elastischen Band 3, das beispielsweise von einer Rolle entnommen wird, umwickelt, bis alle Elemente der Kupplung, einschliesslich der Leiterenden 11A, 11B nach aussen vollständig abgeschirmt sind. Vor dem Umwickeln der Kupplung mit dem Band 3 kann diese noch mit einem festen oder losen Zusatzstoff 4 (siehe Figur 9) umgeben werden, welcher das freie Volumen im Bereich der Kupplung soweit füllt, dass Füllmaterial 5 nur noch in dem Mass erforderlich ist, um eine mechanisch feste und wasserdichte Verbindung zwischen den Isolationskörpern 12A, 12B der Stromschienen 1A, 1B zu erstellen. Der Bedarf an Füllmaterial 5 und die entsprechenden Aushärtungszeiten können dadurch signifikant reduziert werden.

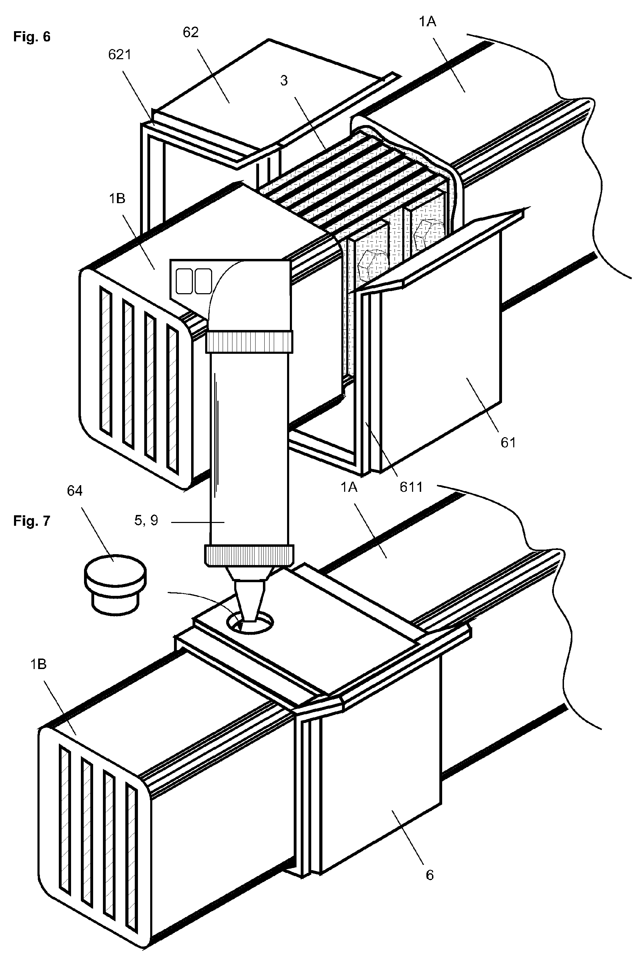

Figur 6 zeigt die miteinander verbundenen und vom Isolationselement 3 umschlossenen Enden der zwei Stromschienen 1A, 1B von Figur 5, während der Montage des zweiteiligen Kupplungsgehäuses 61, 62, mittels dessen die erstellte mechanische Kupplung umschlossen wird. Die Teile 61, 62 des montierten Kupplungsgehäuses weisen vorzugsweise Flanschelemente 621, 622 auf, die an den Rändern der Isolationskörper 12 der beiden Stromschienen 1A, 1B anliegen und die mechanische Kupplung dicht einschliessen.

Figur 7 zeigt die miteinander verbundenen und mit dem Kupplungsgehäuse 61, 62 versehenen Stromschienen 1A, 1B von Figur 6, während des Einfüllen des Füllmaterials 5.

Figur 8 zeigt ein balgförmiges Isolationselement 30, welches vor der Verbindung der beiden Stromschienen 1A, 1B über die Leiterenden 11A oder 11B einer der Stromschienen 1A oder 1B gestülpt und gegen deren Isolationskörper 12A oder 12B gestossen wird. Die frei liegenden Enden der Leiter 11A oder 11B können daher problemlos miteinander verbunden werden. Anschliessend wird ein Ende des Balgs 30 über die mechanische Kupplung bis zum Isolationskörper 12A der benachbarten Stromschiene 1A gezogen. Zum dichten Abschliessen der Kupplung weist der Balg 30 beidseitig je eine vorzugsweise elastische Manschette auf, welche vorzugsweise dicht am zugehörigen Isolationskörper 12A bzw. 12B und den Leiterenden 11A bzw. 11B anliegt. Die Manschetten können natürlich auch mittels eines Klebbandes fixiert werden. Das zwischen den Manschetten 31 liegende Balgsystem 32 kann dabei derart gewählt werden, dass es im erforderlichen Mass auf oder zugefaltet wird um den Raum im Bereich der Kupplung bedarfsweise zu füllen und von Füllmaterial 5 freizuhalten.

Figur 9 zeigt ein alternatives Isolationselement 300, welches aus zwei miteinander verbindbaren Schalen besteht, die eine Innenverschalung bilden. Damit dieses an den Leiterenden 11A, 11B fest gehalten wird, kann darin ein fester oder elastischer Zusatzstoff 4 vorgesehen werden.

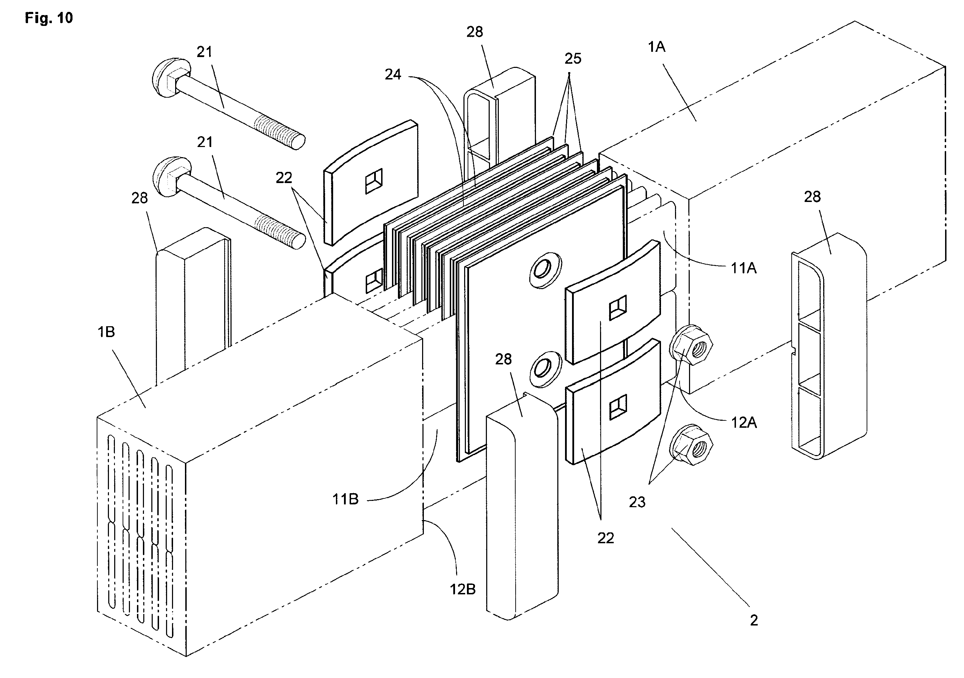

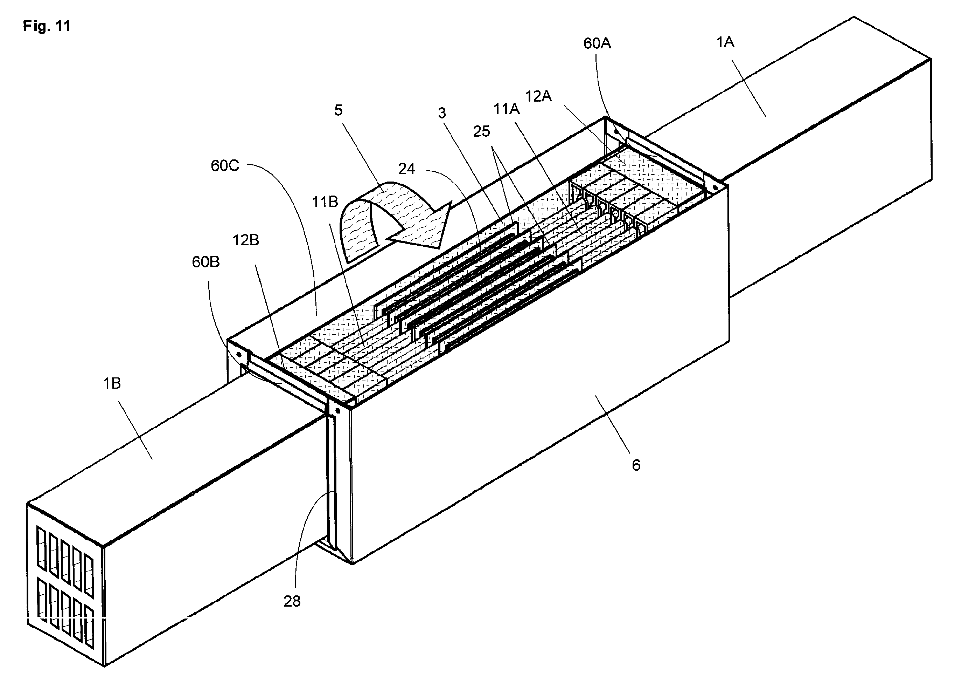

In Figur 10 ist eine aus [2], Seite 9 bekannte Kupplungsvorrichtung gezeigt, mittels der die Enden von zwei Stromschienenelementen 1A, 1B miteinander verbunden werden. Die elektrischen Leiter 11A, 11B beider Stromschienenelemente 1A, 1B liegen bei dieser Kopplungsvorrichtung nicht direkt aneinander an, sondern werden mittels mehrer Kontaktplatten 24 und Isolationsplatten 25 miteinander verbunden. Die Kontaktplatten 24 und Isolationsplatten 25 werden mittels Schrauben 21, Schraubenmuttern 23 und bombierten Unterlagsscheiben 22 zusammengepresst und vorgespannt. Gezeigt sind ferner Hilfselemente 28, mittels derer das in Figur 11 gezeigte Kupplungsgehäuse 2 positioniert wird.

Figur 11 zeigt die Enden der zwei Stromschienenelemente 1A, 1B von Figur 10, die in seitliche Öffnungen 60A bzw. 60B eines schachtel- oder quaderförmig ausgestalteten Kupplungsgehäuses 2 eingeführt, mittels der in Figur 10 gezeigten Kopplungsvorrichtung miteinander verbunden und mit einem Isolationselement 3 umschlossen sind. Das Kupplungsgehäuse 2 weist nebst den beiden einander gegenüber liegenden Öffnungen 60A bzw. 60B an der Oberseite, die parallel zu den Stromschienenelementen 1A, 1B ausgerichtet ist, eine dritte Öffnung 60C auf, durch die das pastöse Füllmaterial 5 eingefüllt wird.

## Patentansprüche

1. Verfahren zur Verbindung von Stromschienen bzw. Stromschienenelementen (1A, 1B), die je wenigstens einen in einem Isolationskörper (12A, 12B) eingeschlossenen elektrischen Leiter (11A, 11B) aufweisen, anhand einer Kupplungsgarnitur (2), die mechanische Montagemittel, wie Schrauben (21), Isolationsplatten(25), Kontaktplatten (22, 24) und Schraubenmuttern (23), sowie ein vorzugsweise abschliessbares ein- oder mehrteiliges Kupplungsgehäuse (6; 61, 62) umfasst, wobei
a) in einem ersten Schritt die Enden der elektrischen Leiter (11A, 11B) beider Stromschienenelemente (1A, 1B) anhand der mechanischen Montagemittel (21, 22, 23) fest miteinander verbunden werden;
b) in einem zweiten Schritt das Kupplungsgehäuse (6; 61, 62) derart montiert wird, dass es
b1) die miteinander verbunden Enden der elektrischen Leiter (11A, 11B) beider Stromschienenelemente (1A, 1B) oder
b2) die miteinander verbunden Enden der elektrischen Leiter (11A, 11B) beider Stromschienenelemente (1A, 1B) sowie die Enden der Isolationskörper (12A, 12B) umfasst; und
c) in einem anschliessenden dritten Schritt das Kupplungsgehäuse (6; 61, 62) mit Füllmaterial (5) gefüllt wird,
**dadurch gekennzeichnet, dass** die miteinander verbundenen Enden der elektrischen Leiter (11A, 11B) beider Stromschienenelemente (1A, 1B) nach der Durchführung des ersten Schritts und noch vor der Durchführung des zweiten Schritts mit einem Isolationselement (3; 30; 300) umschlossen werden, welches die Enden der elektrischen Leiter (11A, 11B), gegen das Füllmaterial (5) weitgehend abdichtet, das nach der Montage des Kupplungsgehäuses (6; 61, 62) in dieses eingefüllt wird.

2. Verfahren (1) nach Anspruch 1, **dadurch gekennzeichnet, dass** das Isolationselement (3; 30; 300)
a) ein vorzugsweise elastisches Isolationsband (3) ist, mittels dessen die gekoppelten Enden der elektrischen Leiter (11A, 11B) umwickelt werden; oder
b) ein zumindest teilweise elastisches Rohr oder ein Balg (30) ist, der über die Enden der elektrischen Leiter (11A, 11B) gestülpt wird; oder
c) eine ein- oder mehrteilige Verschalung (300) ist, mittels der die Enden der elektrischen Leiter (11A, 11B) abgedeckt werden.

3. Verfahren (1) nach Anspruch 1 oder 2, **dadurch gekennzeichnet, dass** das Isolationselement (3; 30; 300) derart gewählt und gegebenenfalls mit einem Zusatzstoff (4) installiert wird, dass es einen wesentlichen Anteil, bis zu 70% oder mehr, des freien Volumens zwischen den miteinander gekoppelten Enden der elektrischen Leiter (11A, 11B) und den Aussenabmessungen der Stromschienenelemente (1A, 1B) einnimmt.

4. Verfahren (1) nach Anspruch 1, 2 oder 3, **dadurch gekennzeichnet, dass** das Füllmaterial (5) ein pastöses Material, wie Giessharz oder Polymerbeton ist.

5. Vorrichtung zur Verbindung von Stromschienen bzw. Stromschienenelementen (1A, 1B), die je wenigstens einen in einem Isolationskörper (12A, 12B) eingeschlossenen elektrischen Leiter (11A, 11B) aufweisen, mit einer Kupplungsgarnitur (2), die umfasst
a) mechanische Montagemittel, wie Schrauben (21), Isolationsplatten (25), Kontaktplatten (22; 24) und Schraubenmuttern (23), mittels derer die Enden der elektrischen Leiter (11A, 11B) beider Stromschienenelemente (1A, 1B) miteinander verbunden sind und
b) ein vorzugsweise abschliessbares ein- oder mehrteiliges Kupplungsgehäuse (6; 61, 62), welches die Enden der elektrischen Leiter (11A, 11B) oder die Enden der elektrischen Leiter (11A, 11B) sowie die Enden der Isolationskörper (12A, 12B) umfasst und Füllmaterial (5), wie Giessharz oder Polymerbeton, enthält,
**dadurch gekennzeichnet, dass** die miteinander verbundenen Enden der elektrischen Leiter (11A, 11B) beider Stromschienenelemente (1A, 1B) mit einem Isolationselement (3; 30; 300) umschlossen sind, welches die Enden der elektrischen Leiter (11A, 11B) und die damit versehenen Montagemittel (21, 22, 23) vom Füllmaterial (5) trennt.

6. Vorrichtung (1) nach Anspruch 5, **dadurch gekennzeichnet, dass** das Isolationselement (3; 30; 300)
a) ein vorzugsweise elastisches Isolationsband (3) ist, mittels dessen die gekoppelten Enden der elektrischen Leiter (11A, 11B) umwickelt sind; oder
b) ein zumindest teilweise elastisches Rohr oder ein Balg (30) ist, der über die Enden der elektrischen Leiter (11A, 11B) gestülpt ist; oder
c) eine ein- oder mehrteilige Verschalung (300) ist, mittels der die Enden der elektrischen Leiter (11A, 11B) abgedeckt sind.

7. Vorrichtung (1) nach Anspruch 5 oder 6, **dadurch gekennzeichnet, dass** das Isolationselement (3; 30; 300) derart gewählt und installiert ist, dass es bis 70% des Volumens zwischen den miteinander gekoppelten Enden der elektrischen Leiter (11A, 11B) und den Aussenabmessungen der Stromschienenelemente (1A, 1B) einnimmt.

8. Vorrichtung (1) nach Anspruch 5, 6 oder 7, **dadurch gekennzeichnet, dass** das Isolationselement (3; 30; 300) aus einem elektrisch isolierenden Material besteht, welches innerhalb eines Temperaturbereichs von -40°C bis 150°C temperaturbeständig ist.

9. Vorrichtung (1) nach Anspruch 7 oder 8, **dadurch gekennzeichnet, dass** innerhalb des Isolationselements (3; 30; 300) ein ergänzender Zusatzstoff (4) vorgesehen ist.

10. Vorrichtung (1) nach einem der Ansprüche 5-9, **dadurch gekennzeichnet, dass** das vorzugsweise quaderförmig ausgestaltete Kupplungsgehäuse (6) Öffnungen (60A; 60B) aufweist, durch die die Enden der Stromschienenelemente (1A, 1B) in das Kupplungsgehäuse (6) eingeführt sind, welches eine sich gegebenenfalls über eine gesamte Quaderseite erstreckende weitere Öffnung (60C) aufweist, durch die das Füllmaterial (5) zuführbar ist.

11. Vorrichtung (1) nach Anspruch 10, **dadurch gekennzeichnet, dass** angrenzend an die Öffnungen (60A; 60B)und anliegend an die durch diese eingeführten Enden der Stromschienenelemente (1A, 1B) ein oder mehrere Hilfselemente (28) vorgesehen sind, mittels derer die Öffnungen (60A; 60B) abgedichtet und/oder deren Kanten abgedeckt werden.
